# EUROPEAN PATENT SPECIFICATION

(11) **EP 0 603 925 B1**
(45) Date of publication and mention of the grant of the patent: **28.02.1996**
(21) Application number: 93203343.4
(22) Date of filing: 30.11.1993
(51) Int. Cl.: H01S 3/06, H01S 3/23, H01S 3/094

(54) **Optical signal generator for telecommunication equipment**
Generator optischer Signale für Telekommunikationsanlage
Générateur de signaux optiques pour équipements de télécommunications

(30) Priority: 23.12.1992 IT MI922932
(43) Date of publication of application: 29.06.1994
(73) Proprietor: PIRELLI CAVI S.p.A., I-20126 Milano (IT)
(72) Inventor: Fontana,Flavio, I-20032 Cormano (Milano) (IT); Righetti, Aldo, I-20146 Milano (IT); Grasso, Giorgio, I-20052 Monza (Milano) (IT)
(74) Representative: Marchi, Massimo

(56) References cited:
- EP-A- 0 387 075
- PROCEEDINGS ECOC 91, 9-12 SEPTEMBER 91,, PARIS pages 149 - 152 G.GRASSO ET AL. 'Single longitudinal mode operation of an Erbium-doped fiber laser with microoptics Fabry-Perot interferometer'
- PROCEEDINGS ECOC 91,INVITED PAPERS, 9-12 SEPTEMBER,, PARIS pages 87 - 96 Y.K.PARK ET AL. 'Long distance transmission with Erbium-doped amplifiers in direct and coherent detection system'
- IEEE PHOTONICS TECHNOLOGY LETTERS, vol.2, no.8, August 1990, NEW YORK US pages 562 - 564, XP000149727 J.B.SCHLAGER ET AL. 'Subpicosecond pulse compression and Raman generation using a mode-locked Erbium-doped fiber laser-amplifier'

## Description

The present invention relates to an optical signal generator including at least a laser as said signal source and at least an optical amplifier operatively connected to said laser, particularly suitable for telecommunication equipments, such as cable television equipments (CATV) and signal distribution networks.

At present, high-power and high-speed transmissions are limited by the maximum power of the single-frequency semiconductor lasers of the type DFB (distributed feed-back), used as signal sources. As a matter of fact, it is difficult to realize semiconductor laser which have an output above 2-4 mW and which are reliable. Furthermore, if in a semiconductor laser bias current is commutated or modulated, at high modulation speed, the fast current change causes a change in the frequency of the light emitted by the device. When the signal propagates in a dispersive means (such as an optical fibre) frequency changes turn into propagation time variations and the quality of the received signal is degraded.

If the laser operates with continuous wave (CW) and an external width modulator is arranged downstream, the frequency noise problem is eliminated. Nevertheless, the width modulator, generally an integrated optics passive device, causes an additional loss due to the coupling losses which take place owing to light transition from an optical fibre to a wave guide of the modulator and vice versa.

These losses involve a power penalization of 3-4 dB, further reducing the available optical power.

It has been provided to use an amplifier placed downstream of the modulator in order to increase output power to 20-40 mW, as described in PROCEEDINGS ECOC '91, (Post Deadline Paper), pages 72-75, from P.M. Gabla and others.

In such document it is described an experiment using a DFB laser transmitter connected to a Mach-Zender external modulator, followed by an erbium doped optical fibre postamplifier (EDFA), in order to raise the signal level up to +12 dBm; the transmission path was constituted from 26 sections each one including one erbium doped optical fibre amplifier (EDFA) and one fibre coil.

The DFB laser used had emission at 1553 nm, while the maximum absorption of the amplifier fibre was at 1533 nm.

Furthermore in OFC '92, pages 242, 243 (Y.K. Park and others) a long distance transmission experiment is described in which a DFB laser at 1558 nm wavelenght emission was connected to a Mach-Zender external modulator and then to a power amplifier, constituted of two series connected erbium doped optical fibre amplifiers (EDFA), each one of them with bidirectional pumping.

In order to obtain the better performances of the amplification stadium connected to the laser, and of the line amplifiers, anyway, the emission wavelength of the continuous wave laser must be fitted as much as possible to the gain pick wavelenght of the amplifier, which, if carried out in fibre, silica doped with erbium, has values of about 1531 or 1536 nm, in relation to the dopant, germanium or alumina, which is used to modify the refraction index of the fibre core.

In order to satisfy this requirement it is requested to use a DBF laser at selected wavelenght, and this involves, among other things, manufacturing difficulties and a significant cost increase.

The known structure, besides, shows drawbacks, due, among other things, to the requirement of limiting the noise generated by the amplifier, which is particularly critical for some applications and which requires the maintenance of an high pumping power level along the whole fibre; such a condition requires on the one hand to feed high pumping powers to the fibre, thus reducing the amplifier efficiency, and on the other hand to have at disposal high power pumping lasers, having, for this reason, a reduced reliability.

In order to supply such high pumping power, may also be required pumping splittings and multi-stages amplifications, which make the structure more complex and affect the whole efficiency: for instance, Y. Park and others in OFC '92 describe the use, as power amplification unit, of two fibre amplifiers, each of them pumped with two pumping laser having power respectively of 15,3 dBm and of 17,3 dBm, for an output power of 16 dBm.

There are also known fibre laser doped with erbium, as described in "PROCEEDINGS ECOC '91, pagg. 149-152 by G. Grasso et al.; such lasers, nevertheless, require the use of a diode pumping laser, which is commercially available with emission powers which are not optimal for the fibre laser operation. so that the fibre laser comes out itself of limited efficiency, particularly for the aforesaid uses in the telecommunications.

It has been found that the combination of a fibre laser and of a fibre amplifier, in which the pumping power is shared between the laser and the amplifier. allows the achievement of a high efficiency and low noise generator, overcoming the typical limits of the known solutions and of the single components.

Object of the present invention is therefore an optical signal generator, particularly for telecommunications, which has high efficiency and reliability, together with low costs.

Accordingly, the invention relates to an optical signal generator comprising a continuous wave coherent optical signals source and an optical amplifier, operatively connected to said source for the optical signals amplification, wherein
- said source is constituted by an optical fibre laser oscillator, comprising an active optical fibre having core doped with a selected fluorescent substance having laser emission at an emission wavelength and light absorption at a pumping wavelength, different from said emission wavelength,
- said optical amplifier comprises an active optical fibre having core doped with a selected fluorescent substance having emission at said emission wavelength and light absorption at said pumping wavelength,
- pumping means supplying optical power at said pumping wavelength are operatively connected to at least one of said active fibres of said laser oscillator and amplifier, and
- selective transfer means for said pumping optical power are operativaly connected to said active fibres of said laser oscillator and amplifier, in order to transfer not absorbed optical power at the pumping wavelength from one of said active fibres to the other of said active fibres.

According to a preferred embodiment, said transfer means comprise selective dichroic couplers between said emission wavelength and said pumping wavelength, said couplers having three optical input/output branches, among which
- a respective first branch, which jointly leads optical signals at the emission wavelength and at the pumping wavelength. is respectively connected to an end of said active optical fibre of said laser oscillator and of said active fibre of said amplifier,
- respective second branches, which lead optical signals at the emission wavelength, are operatively connected to conduct between themselves, and
- respective third branches, which lead optical signals at that pumping wavelength, are connected between themselves through a by-pass optical conduction means for the luminous emission transfer at said pumping wavelength between said laser oscillator and amplifier.

Advantageously said active fibres of said laser and amplifier have core doped with at least a same fluorescent substance, constituted by erbium.

Features and advantages of the invention will be now illustrated with reference to preferred embodiments, represented by way of not limiting example, in the jointed figures, wherein:
- fig-1 is a schematic representation of a first embodiment of an optical signal generator;
- fig.2 is a schematic representation of a second embodiment of a optical signal genarator;
- fig.3 is a schematic representation of the trend of partial and total pumping powers along the optical signal generator.

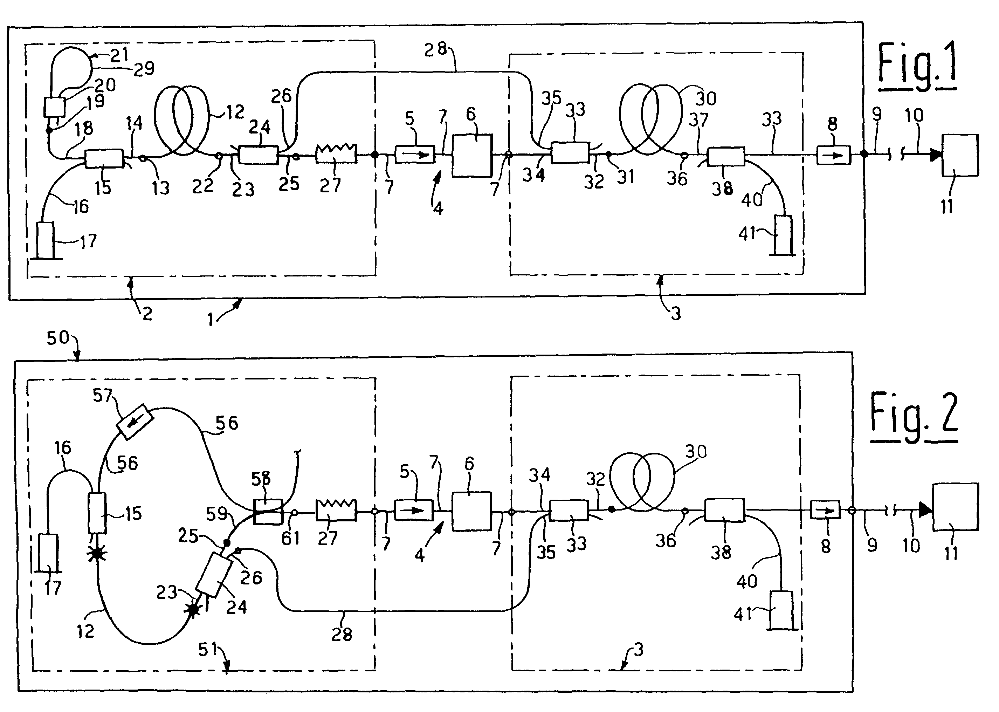

In fig.1 is altogether indicated with 1 an optical signal generator including a single-frequency continuous wave (CW) laser oscillator, wholly indicated with 2, which constitutes an optical signal source at emission wavelength, and an amplifier, wholly indicated with 3.

It is wholly indicated with 4 a connection line between said laser 1 and said amplifier, including an optical fibre 7, an optical insulator 5 and a width modulator of the aforesaid signals, indicated with 6. for example a Mach-Zender modulator.

With 8 there are indicated an optical insulator disposed downstream of the amplifier 3 and with 9 an optical output fibre from generator 1, connected, through an optical fibre 10, to a receiver of the output signals from generator 1, represented by a block 11.

The laser 2 active means is constituted by an active optical fibre 12 including a refraction index modifier, preferably constituted by alumina, germanium or alumina and germanium, having core doped with at least a selected, fluorescent substance, preferably constituted by erbium.

The active fibre 12 has an upstream end 13 connected to an output 14 of a dichroic coupler 15, having an input 16 connected to a pump laser 17, able to supply pumping power at pumping wavelength; an input 18 of said coupler 15 is connected to an output 19 of a directional coupler 20, in its turn connected to the ends of a wide-band reflector 21, which, in the described embodiment, is constituted by a reflexion ring 29 able to reflect the whole emission spectrum of the active fibre 12, or at least its interesting part for the transmission.

In an other version the wide-band reflector could be constituted by metal coating (gilding) of the terminal surface of the fibre 12, or even by a wide-band Bragg grating reflector.

The active fibre 12 has a downstream end 22 connected to an input 23 of a dichronic coupler, or multiplexer, 24 with three optical input/output branches, whose output 25 is connected to a narrow-band, selective reflector 27, able to reflect a band whose width is less than 0,5 nm and preferably less than 0,1 nm of the active fibre 12 emission spectrum, which is preferably constituted by a Bragg grating optical fibre reflector, or by a Fabry-Perot interferometer with "GRIN" lens (abbreviation for "graded index", or gradually variable refraction index), working as narrow-band reflector, in its turn connected to the line 4; the output 26 of the coupler 24 is connected to a branching off fibre, or at the pumping wave-length, longitudinal single-mode (monomodal) "by-pass" 28, in parallel to said line 4.

A fibre laser using a grating reflector is, for example, described in "Electronics Letters", vol. 24, Nr. 1, 7 Gennaio 1988.

A fibre laser operating at longitudinal single-mode, by means of a Fabry-Perot interferometer with "GRIN" lens is described in "PROCEEDINGS ECOC 1991, pages 149-152.

A Fabry-Perot interferometer is commercially available; the structure of an interferometer with GRIN lens, known in itself, is described in particular in the aforesaid article.

The Bragg grating reflector is consituted by an optical fibre whose cladding and core are partly removed for a length, forming a surface on which, by means of a photochemical process, several parallel wavinesses are realized having pitch Λ which is related to the reflected wavelength by the relation λ = 2 nₑΛ, wherein nₑ is the effective mode refraction index of said fibre; therefore the grating pitch is related to the emission band-width of the laser 2.

The Bragg reflector features are not further described in detail because it is known and commercially available.

The amplifier 3 comprises an optical active fibre 30, including a refraction index modifier, also preferably consituted by alumina. germanium or alumina and germanium, having core doped with at least a selected fluorescent substance, also preferably constituted by erbium.

Preferably the amplifier active fibre is a fibre having the same features of the laser oscillatore active fibre; in particular it is favourable that the fluorescent dopant and the one or more index modifier dopants are the same, or are anyway chosen so that the laser emission spectrum is as much as possible equal to that of the amplifier (within the field of considered wavelengths), so as to have the laser emission at the wavelength of maximum gain for the amplifier, thus obtaining the best complex efficiency.

The active fibre 30 has an upstream end 31 connected to an output 32 of a dichroic coupler, or "multiplexer" 33, whose inputs 34 and 35 are respectively connected to the line 4 and to the by-pass fibre 28.

A downstream end 36 of the active fibre 30 is connected to an input 37 of a dichroic coupler 38, whose outputs 39 and 40 are respectively connected to said optical insulator 8 and to a pump laser 41, able to supply pumping power at the aforesaid second fixed wavelength, supplying the active fibre 30 from its downstream end, counter-current with respect to the direction path of the optical signal within the amplifier 3.

The optical signal generator 1 works as follows.

The active fibre 12 of the laser 1 receives pumping energy at the pumping wavelength, which is therein absorbed giving rise to a laser transition with ligth emission at the emission wavelength, which is amplified in consequence of reflections due to reflectors placed at the ends of the fibre itself, giving rise to a coherent ligth emission; such emission is sent through the optical insulator 5, to the modulator 6 and then to the amplifier 3.

The modulator 6 looks for converting the continuous emission of the laser 2 into a modulated optical signal.

The amplifier 3, whose active fibre is maintained in a population inversion state (namely excited at a laser emission level) by the pumping power therein absorbed, amplifies hence the signal, up to a power level which is enough to be fed into the output optical fibre 9 and to reach the receiver 11 through the fibre 10 mantaining a power level which is enough to its acknowledgement, even after the attenuation introduced by the fibre 10 itself, which in the practical application may have a considerable length, for example dozens or hundreds of kilometres.

The pump laser 17 of the laser oscillator 2 is dimensioned to generate optical power in excess with respect to that absorbed by the active fibre 12, for reasons which will be hereafter illustrated; the not absorbed residual optical power at the end 22 of the fibre 12 itself is transferred to the active fibre 30 of the amplifier 3 by means of the couplers 24, 33 and the by-pass fibre 28.

Similarly, the pump laser 41 of the amplifier 3 is dimensioned for generating optical power in excess with respect to that absorbed by the active fibre 12; the residual excess of power at the end 31 of the active fibre 30 of the amplifier 3 is transferred to the active fibre 12 through the same couplers 24, 33 and the same by-pass fibre 28.

In accordance with the invention, it has been realized an optical signal generator according to the pattern of fig.1, which had the following features.

Laser 2 in the described example has been realized with an active fibre 12 having core doped with erbium, having the following features:

| | |
|---|---|
| fibre length | 5 m |
| fibre type | Si/Al |
| numerical aperture | NA = 0.19 |
| cut off wavelength | λ_{c} = 900 nm |
| erbium content in the core | Nt = 5.8 10⁴ ions/m³ |
| pumping section | sp = 2.8 10⁻⁵ m |

The pump laser 17 and 41 are laser of known type as "Strained Quantum Well" with the following features:

| | |
|---|---|
| emission wavelength | λₚ = 980 nm |
| output power | Pu = 80 mW |

Laser of the specified type are for instance produced by David Sarnoff Research Center, Washington Rd, Princeton N.J. (USA).

The reflection ring 21 has been formed with about 50 cm of monomodal optical fibre at the signal wavelength.

The directional coupler 20 has power division ratio of 50/50 and is of commercial kind, as for instance model 1550 POH 50/50 2x2 produced by Gould Inc., Fibre Optic Division, Baymeadow Drive, Glem Burnie. M.D. (USA).

Dichroic couplers 15 and 24 herein used. are melted fibre couplers consisting of two monomodal fibres at 980 nm and 1531 nm wavelength, with variation of output optical power as a function of the polarization, lower than 0,2 dB, so as to avoid emission instability, in presence of thermal variations or mechanical stresses which cause a variation in the emission polarization of the pump laser 17.

Dichroic couplers of the indicated kind are produced, for instance, by Gould Inc.. Fibre Optic Division, Baymeadow Drive, Glem Burnie, M.D. (USA), and by Sifam Ltd.. Fibre Optic Division, Woodland Road, Torquay Devon (GB).

The output fibre 25 of the coupler 24 is travelled by ligth at 1531 nm wavelength, while the by-pass fibre 28 is travelled by ligth at 980 nm wavelength.

The used Bragg grating selective reflector 27 has the following features:

| | |
|---|---|
| reflectivity | 35% |
| reflected wavelength | λ = 1531 nm |
| band width | 0.7 nm |

Reflectors of this kind are marketed by United Tecnologies Photonics, Silver Lane, East Hartford, USA.

The modulator 6 is an intensity modulator based on a wave guide version of a Mach-Zender interferometer. of commercial kind, with band width in linear field of 3 GHz, with minimal extinction ratio of 22 dB, suitable for working within the wavelength field 1530-1550 nm; it has been used model MZ315P produced by Crystal Technology, Inc., 1060 East Meadow Circle, Palo Alto, California, USA.

The active fibre 30 of the amplifier 3 with the core doped with erbium had the following features:

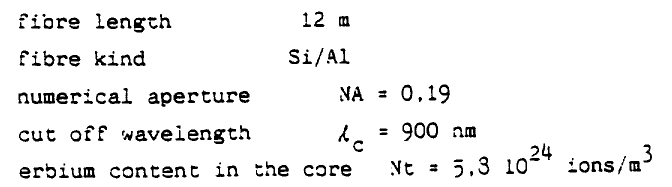

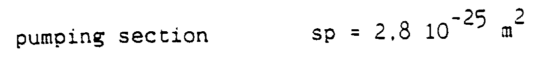

The described generator has shown the following features:

| | |
|---|---|
| total pumping optical power | 160 mW |
| laser pumping optical power | 80 mW |
| amplifier pumping optical power | 80 mW |
| residual pumping power in the laser | 20 mW |
| residual pumping power in the amplifier | 15 mW |
| signal power at the laser output | 3 mW (5 dBm) |
| signal power after modulation | about 1 mW (0 dBm) |
| signal power after amplification | 45 mW (16 dBm) |

The laser 2 illustrated in fig.1 is provided with a steady wave resonant cavity, but other cavity architectures may be used, for instance ring cavity incorporating a reflection grid, as in the optical signal generator of fig.2.

In this version of the optical signal generator the elements common with that of fig.1 are indicated with the same numbers. The optical generator, wholly indicated with 50, includes a single-frequency continuous wave laser 51 and an amplifier 3.

The laser 51 is constituted by an active fibre 12, for instance of the same kind of that in fig.1, by a dichroic coupler 15 connected through an optical fibre 16 to a pumping laser 17, and by a reflecting optical fibre 56 provided with an optical insulator 57; the reflecting fibre 56 is connected to a directional coupler 58 to which is even connected an optical fibre 59 in its turn connected to a dichroic coupler 24; the coupler 24 is connected to the active fibre 12 and to the by-pass optical fibre 28. An output 61 of the directional coupler 58 is connected to the selective grid reflector 27.

Even in this case, the light emission at 1531 nm generated by the fibre laser 51 propagates through the optical insulator 5 and the width modulator 6, entering the fibre amplifier 3 pumped through a coupler 33, and is then transmitted to the receiver 11, as it occurs in the optical generator 1 of fig.1.

Likewise, the excessive pump power of one or of the other pump laser 17, 41 is transferred either to the active fibre 30 or to the active fibre 12.

The directional coupler 58 has a division ratio of 50/50 and shares with this ratio between the fibres 56 and 59 the ligth beam power reflected by the selective reflector 27.

In afore described optical signal generators 1 and 50, the laser resonant cavity is delimitated by the ring of the reflection fibre 21 or by the reflection fibre 56 (or by an other wide band equivalent mirror) acting as high laser reflector, and by a grid fibre 27 acting as an output coupler with a extremely narrow reflection band.

The pumping energy generated by the pump laser 17 is fed through the respective coupler 15 to the erbium doped fibre 12, which constitutes the active means of the laser source.

Within the laser cavity is present a dichroic coupler 24 able to convey in the active fibre 12 the pump energy coming from the amplification stadium 3 through the pump by-pass 28.

The single-frequency laser 2 or 51 with erbium doped active fibre 12, is connected with an amplification stadium 3 even with erbium doped active fibre 30. The fibre laser emission coincides with the gain peak in the amplifier fibre; this assures the most efficient amplification of the light produced by the fibre laser.

The laser single-frequency operation is obtained with the use of the grid reflector 27 with narrow-width band, typically less or equal to 0,1 nm, using the spectral selectivity of the periodical structure of the reflector grid and the mode competition due to the different reflection efficiency at the different frequencies within the reflector reflection band, which penalizes the wavelength modes different from that of maximum reflection within the band, which are subjected to hoher losses and do not reach the laser operating threshold.

A laser of this kind is described, for instance, in the aforesaid article "Electronics letters", pages 24-26, vol.24, Nr. 1, 7 Gennaio 1988.

The presence of residual pumping power at the end of the laser 2 active fibre and of the amplifier 3 is related to the particular kind of fluorescent dopant therein used, preferably constituted by erbium.

In fact erbium, present as dopant in the fibre core in the form of ion Er³⁺, forms a so-called "three levels" emission system, wherein the pumping energy fed in the fibre is absorbed and excites iones Er³⁺ from the basis level to an energy band so-called pumping band, from where they fall, in not a radiative way, to an excited level so-called higher laser level, where they can rest for a certain time before to spontaneously fall again to the basic level.

The photon passage at the same wavelength corrisponding to said laser level causes a transition of the erbium ion to the basic level, followed by the emission of a new photon, coherent with the first and having the same wavelength.

Such phenomenon allows the generation of a signal due to spontaneous emission and its coherent amplification, caused by multiple reflections in a laser oscillator, like the laser 2, and the amplification of an outer signal which is fed as in the fibre amplifier 3.

In presence of erbium ions at basic level, on the contrary, a photon at the wavelength corresponding to the aforesaid laser emission level is absorbed, exciting a corresponding erbium ion at laser level, hence causing a signal attenuation.

Therefore, in order to have a signal emission or amplification, it is necessary that along the whole active fibre length the pumping power is higher than a certain level, or "threshold level", at which erbium ions at the hoher laser level are of the same number than the ones at the basic level, so that the amplification effect due to erbium ions excited at laser level compensates the attenuation effect due to erbium ions at basic level, in this way realizing the so-called fibre "transparency".

In an active fibre the threshold power value depends on the dopant (erbium) content therein; by way of example, in the active fibre of the example of fig. 1 the threshold power is of 5 mW.

For various reasons, besides, it is preferable to mantain even at the active fibre end opposed to that of pumping energy input a residual pump power value not only equal, but even higher at a certain value than the aforesaid threshold value; in this way at the end of the active fibre there still remains an amount of pumping optical power, at least equal to the aforesaid "threshold" value, which would result dispersed.

The request to mantain an high pump power level even at the extreme section of the active fibre is particularly important in the amplifier, wherein it has been observed that the "noise" due to the same amplifier considerably rises when pumping power has a minimum value in the fibre close to the "threshold" power, with respect to a situation in which the minimum value of the pumping power in the fibre is enough away from that "threshold" power.

The "noise" is in fact proportional to the atomic population in the higher laser level and descreases less rapidly than the gain along the fibre with the pumping power descreasing within the fibre itself.

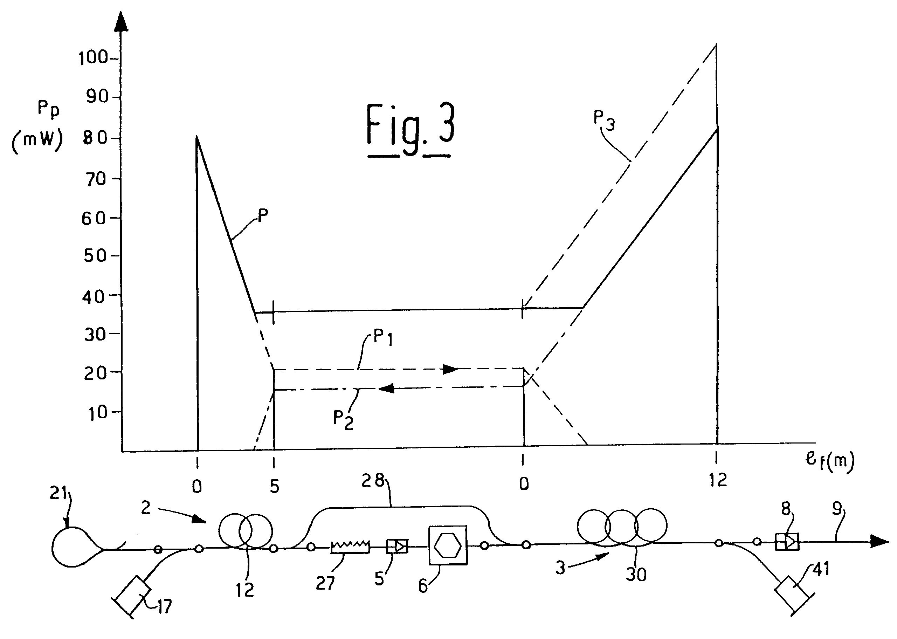

In fig.3 is shown the trend of the pumping power Pₚ supplied in the respective active fibres 12 and 30 of the laser and of the amplifier, as a function of the length l_{f} of the fibres itselves; with the broken line P₁ is indicated the pump power due only to the pump laser 17 and with the dotted line P₂ is indicated the pump power due only to the pump laser 41.

The continuous line P shows the whole pump power in the fibres, due to the contribution of both the pump lasers.

As it results by the previously related experimental data, without "by-pass" the pump power supplied by the pump laser 17, not absorbed by the doped fibre 12 and present at its end 22, has a considerable value, equal to 20 mW in the shown example; in the amplifier, in its turn, the residual pumping power at the end 31 of the fibre 30 has a value equal to about 15 mW.

In the amplifier, anyway, such residual power level would result excessive low, such as to cause an unacceptable high noise level in the emitted signal, while a minimal acceptable value of residual pump power in the amplifier fibre is higher than 25-30 mW.

With 15 mW of residual minimum pump power in the amplifier fibre it may be estimated a noise figure, defined as (S/N)ᵢ /(S/N)ₒ, higher than 4.8 dB, being
(S/N)ᵢ the ratio between the signal power and the noise power at input in the amplifier and
(S/N)ₒ the ratio between the signal power and the noise power at output from the ratio between the signal power and the noise power at output from the amplifier.

The residual pump power transfer from the one to the other of the active fibres allows hence, as it appears by the diagram (which schematically represent the phenomenon) to keep, particularly in the amplifier 3, a pump power level never less than 35 mW, which allows to obtain particularly low noise values (in the described experiment it has been obtained a noise figure equal to about 3.8 dB).

Such performance, without pump power tranfer, would require much hoher power values of the laser 41 (just to give an idea of about 100 mW, as shown in fig.3 with broken line P₃), which can be obtained with a laser much expensive and less reliable due to the high required power.

The structure according to the invention, besides, prevents from any dissipation of residual pump power, which has not been absorbed in the active fibre of the laser 2, for which it would not be practical to take a pump laser of an excessively low power, which would be suitable only for the requirements of the laser 2 itself.

Modulator 6, which as it has been said, is preferably a Mach-Zender modulator, in LiNbO₃, is placed upstream of the amplifier 3, in order to avoid "photorefractive" damaging risks of the wave guide of said modulator, due to the high power at stake (more than 10 mW), that would show if it would be disposed to modulate an already amplified signal (high optical powers may generate the formation of couples electron-hole in the wave guide structure, which change the light propagation).

In the example illustrated, the generator 1 includes the pump lasers 17 and 41, but a generator according to the invention may be equipped either only of the pump laser 17 or only of the pump laser 41, because the by-pass optical fibre 28 allows the transfer of the exceeding pump power, in the first case, to the active fibre 30 of the amplifier 3, and in the second case, to the active fibre 12 of the laser 2.

Preferably, there are used two equal pump lasers, thus being able to obtain an hoher reliability of the unit, thanks to the more limited power required from each of them, avoiding to resort to use high power lasers, that is to resort to use complex multi-stage or multi-pump structures, without, with this, affecting the system performances.

The by-pass 28 pump solution allows a drastic semplification of the architecture of the optical signal generator, optimizing the use of the available pump power.

In the aforedescribed realization examples, the amplifier 3 is pumped by a source of pump power 41, through the coupler 38 and the pumping energy propagates counter-current.

Part of the residual pump power not used in the elevation section of the signal power (amplifier 3) is fed to the laser 2 through the wavelength multiplexer couplers 33, 24, thus contributing to the population inversion of the active means of said laser.

Hence the exceeding or residual pump power, not absorbed by the fibre 30 is deviated from the signal path (line 4) by the coupler 33 and is fed back to laser 2 or 51 through the coupler 24.

This solution allows an optimized use of the pump power and a maximization of the total convertion efficiency (pump power with respect to modulated signal power at 1531 nm).

The pump by-pass solution may be used even if the pump laser 17 is an high power source and the length of the active fibre 12 is so small chat very little pumping power is therein absorbed.

In this case almost the whole pump power reaches the coupler 24 and is transmitted to the active fibre 30 of the amplifier 3 through the coupler 33.

For some applications, for instance cable television (CATV) and the like, it is particularly important that the laser 2 operation is very steady and without mode jumps.

To this end it is convenient to make use of a cavity-laser of small dimensions, that is to use an active fibre as short as possible, and make the laser 2 operate at rather low signal emission optical power levels, approximatively less than 3 mW (5dBm), and preferably less than 1,5 mW, with the aim to favour single-longitudinal mode (monomode) operation, in which only one frequency is emitted.

In such a case, adopting standard reflectivity values for the selective reflector 27:$\text{0,4 < Rgr < 0,6}$ where Rgr is defined as ratio between reflected optical power and incident optical power, the total pump power absorbed by the fibre laser preferably does not exceed 15 mW and is advantageously less than 10 mW.

The laser fit to operate in the aforesaid conditions makes use of an active fibre of limited length, of the order of some dozen centimetres. preferably doped with alumina and with very high erbium content, of the order of 1000 ppm; the pump power value supplied to the laser section and to the amplifier will be hence dimensioned with respect to the whole wished performance.

In the case in which it is instead wished an high amplification efficiency, for example for digital kind transmissions, it is preferable to obtain already in the laser an enough high output power, making use of a fibre of substantial length and of high supply pumping power, as indicated in the example of fig.3.

In the case in which it is made use of active fibres with high numerical aperture (for instance Na > 0,3) it would be obtained, both in the laser section and in the amplification section an high conversion efficiency, near to theoretical values (Pu/Pₚ=0,48. where Pu is the output signal power, at 1531 nm, and Pₚ is the pump power, at 980 nm), and hence it is possible make use of pump laser whose power is less than 80 mW as used in the system described in the example, (for instance 60 or 40 mW), together with active fibres of less length and/or with different erbium content.

The designing of the laser section and of the amplification section. in terms of length and kind of active fibre, based on the specific requirements of each application of the optical signal generator according to the invention, will be made chance by chance by the technician on the basis of the known knowledges in the field.

The reflectivity value of the width modulator 6 is preferably less than -40 dB in order to avoid in the amplifier section the manifestation of spurious oscillations, interferometric noise or amplification efficiency reduction due to exhaustion of the inversion.

It must be noted that the operating wavelength of the complex is defined by the reflection features of the used selective reflector; therefore, this is conveniently chosen so that the reflected wavelength corresponds to an emission peak of the used fibre, or anyway to an emission spectrum region at high emission and amplification efficiency.

For instance, in the case of fibres doped with aiumina, as in the example described, it is convenient to make use of a selective reflector at a wave lenght of about 1531 nm, corrisponding to the emission peak of the fibre doped with erbium and alumina.

Dichroic couplers 24, 33 preferably have a selectivity value greater than 20 dB (at each wavelength the power adressed toward the "wrong' output must be 1% less than the power directed toward the "right" output), with the aim to avoid that the spontaneous amplifier emission may come in the laser, thus compromising the regular operation, or that a fraction of the signal emitted by the laser and not modulated may come in the amplifier, thus constituting a noise.

## Claims

1. Optical signal generator (1; 50) comprising a continuous wave coherent optical signal source (2; 51) and an optical amplifier (3). operatively connected to said source for the optical signals amplification, characterized in that
- said source (2; 51) is constituted by an optical fibre laser oscillator, comprising an active optical fibre (12) having core doped with a selected fluorescent substance, having laser emission at an emission wavelength and light absorption at a pumping wavelength, different from said emission wavelength,
- said optical amplifier (3) comprises an active optical fibre (30) having core doped with a selected fluorescent substance having emission at said emission wavelength and light absorption at said pumping wavelength,
- pumping means (17; 41) supplying optical power at said pumping wavelength are operatively connected to at least one of said active fibres (12; 30) of said laser oscillator (2; 51) and amplifier (3), and
- selective transfer means (24, 28, 33) for said pumping optical power are operatively connected to said active fibres (12; 30) of said laser oscillator (2; 51) and amplifier (3), in order to transfer not absorbed optical power at the pumping wavelength from one of said active fibres (12; 30) to the other of said active fibres (12; 30).

2. Optical signal generator according to claim 1, characterized by said transfer means (24, 28, 33) comprising selective dichroic couplers (24; 33) between said emission wavelength and said pumping wavelength, said couplers having three optical input/output branches (23, 25, 26; 32, 34. 35), among which
- a respective first branch (23; 32), which jointly leads optical signals at the emission wavelength and at the pumping wavelength, is respectively connected to an end of said active optical fibre (12) of said laser oscillator (2; 51) and of said active fibre (30) of said amplifier (3),
- respective second branches (25; 34), which lead optical signals at the emission wavelength, are operatively connected to conduct between themselves, and
- respective third branches (26; 35), which lead optical signals at that pumping wavelength, are connected between themselves through a by-pass optical conduction means (28) for the luminous emission transfer at said pumping wavelength between said laser oscillator (2; 51) and amplifier (3).

3. Optical signal generator according to claim 1, characterized in that said pumping means (17) are operatively connected to said active fibre (12) of said laser oscillator (2; 51).

4. Optical signal generator according to claim 1, characterized in that said pumping means (41) are operatively connected to said active fibre (30) of said amplifier (3).

5. Optical signal generator according to claim 1, characterized in that said pumping means comprise a first pumping means (17; 41) operatively connected to one of said active fibres (12; 30) and a second pumping means (17; 41) operatively connected to the other of said active fibres (12; 30) of said laser (2; 51) and amplifier (3).

6. Optical signal generator according to claim 1, characterized in that said pumping means (41) are connected to the end (36) of said active fibre (30) of said ampiifier (3) opposed to said source (2; 51).

7. Optical signal generator according to claim 1, characterized in that said active fibres (12;30) of said laser (2; 51) and amplifier (3) have core doped with at least one same fluorescent substance.

8. Optical signal generator according to claim 7, characterized in that said fluorescent substance is constituted by erbium.

9. Optical signal generator according to claim 1, characterized in that said active fibres (12; 30) of.said laser (2; 51) and amplifier (3) have core doped with at least one same substance modifier of the refraction index, constituted by alumina.

10. Optical signal generator according to claim 2, characterized in that between said source (2; 51) and said amplifier (3) are interposed width modulation means (6) of said signals at the emission wavelength.

11. Optical signal generator according to claim 10, characterized in that between said source (2; 51) and said modulation means (6) is interposed an optical insulator (5) disposed to allow the only light propagation from said souce to said amplifier.

12. Optical signal generator according to claim 1, characterized by comprising an optical insulator (8) disposed downstream of the active fibre (30) of said amplifier (3) with respect to the path direction of the emission signal.

13. Optical signal generator according to claim 8, characterized in that said emission wavelength is within a band between 1530 and 1550 nm.

14. Optical signal generator according to claim 8, characterized in that said pumping wavelength is 980 nm.

## Patentansprüche

1. Generator (1; 50) optischer Signale mit einer kohärenten, kontinuierliche Wellen erzeugenden optischen Signalquelle (2; 51) und einem optischen Verstärker (3), der zum Verstärken der optischen Signale mit der Quelle wirksam verbunden ist,
dadurch gekennzeichnet, daß
- die Quelle (2; 51) aus einem optischen Faser-Laser-Oszillator besteht mit einer aktiven optischen Faser (12), deren Kern mit einer ausgewählten fluoreszierenden Substanz dotiert ist, deren Laseremission bei einer Emissionwellenlänge liegt und deren Lichtabsorption bei einer Pumpwellenlänge liegt, die sich von der Emissionwellenlänge unterscheidet,
- der optische Verstärker (3) eine aktive optische Faser (30) aufweist, deren Kern mit einer ausgewählten fluoreszierenden Substanz dotiert ist, deren Laseremission bei der Emissionwellenlänge liegt und deren Lichtabsorption bei der Pumpwellenlänge liegt,
- eine mit der Pumpwellenlänge optische Energie erzeugende Pumpeinrichtung (17; 41) wirksam mit mindestens einer der aktiven Fasern (12; 30) des Laseroszillators (2; 51) bzw. des Verstärkers (3) verbunden ist und
- eine selektive Übertragungseinrichtung (24, 28, 33) für die optische Pumpenergie wirksam mit den aktiven Fasern (12; 30) des Laseroszillators (2; 51) und des Verstärkers (3) verbunden sind, um nicht absorbierte optische Energie mit Pumpwellenlänge aus einer der aktiven optischen Fasern (12; 30) in die andere der aktiven Fasern (12; 30) zu übertragen.

2. Generator optischer Signale nach Anspruch 1, dadurch gekennzeichnet, daß die Übertragungseinrichtung (24, 28, 33) selektive dichroitische Koppler (24; 33) zwischen der Emissionswellenlänge und der Pumpwellenlänge aufweist, wobei die Koppler drei optische Eingangs-/Ausgangszweige (23, 25, 26; 32, 34, 35) haben, bei denen
- erste Zweige (23, 32), die optische Signale mit Emissionwellenlänge und mit Pumpwellenlänge zusammen führen, an ein Ende der aktiven optischen Faser (12) des Laseroszillators (2; 51) bzw. der aktiven Faser (30) des Verstärkers (3) angeschlossen sind,
- zweite Zweige (25; 34), die optische Signale mit Emissionswellenlänge führen, wirksam leitend miteinander verbunden sind, und
- dritte Zweige (26; 35), die optische Signale mit der Pumpwellenlänge führen, über eine optische Umleitungs-Leitereinrichtung (28) leitend miteinander verbunden sind, durch die zwischen dem Laseroszillator (2; 51) und dem Verstärker (3) mit der Pumpwellenlänge Lichtenergie übertragen wird.

3. Generator optischer Signale nach Anspruch 1, dadurch gekennzeichnet, daß die Pumpeinrichtung (17) wirksam mit der aktiven Faser (12) des Laseroszillators (2; 51) verbunden ist.

4. Generator optischer Signale nach Anspruch 1, dadurch gekennzeichnet, daß die Pumpeinrichtung (41) wirksam mit der aktiven Faser (30) des Verstärkers (3) verbunden ist.

5. Generator optischer Signale nach Anspruch 1, dadurch gekennzeichnet, daß die Pumpeinrichtung eine erste Pumpeinrichtung (17; 41), die wirksam mit einer der aktiven Fasern (12; 30) verbunden ist, und eine zweite Pumpeinrichtung (17; 41) aufweist, die wirksam mit der anderen der aktiven Fasern (12; 30) des Lasers (2; 51) bzw. des Verstärkers (3) verbunden ist.

6. Generator optischer Signale nach Anspruch 1, dadurch gekennzeichnet, daß die Pumpeinrichtung (41) mit dem Ende (36) der aktiven Faser (30) des Verstärkers (3) verbunden ist, das der Quelle (2; 51) entgegengesetzt ist.

7. Generator optischer Signale nach Anspruch 1, dadurch gekennzeichnet, daß die aktiven Fasern (12; 30) des Lasers (2; 51) und des Verstärkers (3) einen Kern haben, der mit mindestens einer gleichen fluoreszierenden Substanz dotiert ist.

8. Generator optischer Signale nach Anspruch 7, dadurch gekennzeichnet, daß die fluoreszierende Substanz Erbium ist.

9. Generator optischer Signale nach Anspruch 1, dadurch gekennzeichnet, daß die aktiven Fasern (12; 30) des Lasers (2; 51) und des Verstärkers (3) einen Kern haben, der mit mindestens einer gleichen, den Brechungsindex modifizierenden Substanz dotiert ist, die Aluminiumoxid ist.

10. Generator optischer Signale nach Anspruch 2, dadurch gekennzeichnet, daß zwischen der Quelle (2; 51) und dem Verstärker (3) eine Breitenmodulationseinrichtung (6) zur Breitenmodulation der Signale mit Emissionswellenlänge geschaltet ist.

11. Generator optischer Signale nach Anspruch 10, dadurch gekennzeichnet, daß zwischen der Quelle (2; 51) und der Modulationseinrichtung (6) ein optischer Isolator (5) angeordnet ist, der eine Ausbreitung des Lichts nur von der Quelle zum Verstärker zuläßt.

12. Generator optischer Signale nach Anspruch 1, gekennzeichnet durch einen optischen Isolator (8), der der aktiven Faser (30) des Verstärkers (3) in Richtung des Emissionssignals nachgeschaltet ist.

13. Generator optischer Signale nach Anspruch 8, dadurch gekennzeichnet, daß die Emissionswellenlänge in einem Band zwischen 1530 und 1550 nm liegt.

14. Generator optischer Signale nach Anspruch 8, dadurch gekennzeichnet, daß die Pumpwellenlänge 980 nm beträgt.

## Revendications

1. Générateur (1; 50) de signaux optiques, comprenant une source (2; 51) de signaux optiques, cohérente et à onde continue, et un amplificateur optique (3) opérationnellement couplé à ladite source pour amplifier les signaux optiques, caractérisé en ce que :
- ladite source (2; 51) est constituée par un oscillateur laser à fibres optiques, comprenant une fibre optique active (12) dont l'âme est dopée par une substance fluorescente sélectionnée, présentant une émission laser à une certaine longueur d'onde d'émission et absorbant la lumière à une certaine longueur d'onde de pompage qui est différente de ladite longueur d'onde d'émission,
- ledit amplificateur optique (3) comprend une fibre optique active (30) dont l'âme est dopée par une substance fluorescente sélectionnée, présentant une émission laser à ladite longueur d'onde d'émission et absorbant la lumière à ladite longueur d'onde de pompage,
- des moyens de pompage (17; 41), qui fournissent de l'énergie optique à ladite longueur d'onde de pompage, sont opérationnellement couplés à l'une au moins desdites fibres actives (12; 30) dudit oscillateur laser (2; 51) et dudit amplificateur (3), et
- des moyens (24, 28, 33) de transfert sélectif pour ladite énergie optique de pompage sont opérationnellement couplés auxdites fibres actives (12; 30) dudit oscillateur laser (2; 51) et dudit amplificateur (3) afin de transférer l'énergie optique à ladite longueur d'onde de pompage qui n'a pas été absorbée de l'une desdites fibres actives (12; 30) à l'autre desdites fibres actives (12; 30).

2. Générateur de signaux optiques selon la revendication 1, caractérisé par le fait que lesdits moyens de transfert (24, 28, 33) comprennent des coupleurs dichroïques (24; 33) entre ladite longueur d'onde d'émission et ladite longueur d'onde de pompage, lesdits coupleurs ayant trois branches (23, 25, 26; 32, 34, 35) d'entrée/sortie optique parmi lesquelles :
- des premières branches respectives (23; 32), qui conduisent simultanément des signaux optiques à ladite longueur d'onde d'émission et à ladite longueur d'onde de pompage, sont respectivement connectées en une extrémité de ladite fibre optique active (12) dudit oscillateur laser (2; 51) et en une extrémité de ladite fibre optique active (30) dudit amplificateur (3),
- des secondes branches respectives (25; 34), qui conduisent des signaux optiques à ladite longueur d'onde d'émission, sont opérationnellement couplées pour conduire entre elles, et
- des troisièmes branches respectives (26; 35), qui conduisent des signaux optiques à ladite longueur d'onde de pompage, sont opérationnellement couplées entre elles par l'intermédiaire d'un moyen (28) de conduction optique en dérivation, destiné au transfert d'émission de lumière à ladite longueur d'onde de pompage entre ledit oscillateur laser (2; 51) et ledit amplificateur (3).

3. Générateur de signaux optiques selon la revendication 1, caractérisé par le fait que lesdits moyens de pompage (17) sont opérationnellement couplés à ladite fibre active (12) dudit oscillateur laser (2; 51).

4. Générateur de signaux optiques selon la revendication 1, caractérisé par le fait que lesdits moyens de pompage (41) sont opérationnellement couplés à ladite fibre active (30) dudit amplificateur (3).

5. Générateur de signaux optiques selon la revendication 1, caractérisé par le fait que lesdits moyens de pompage comprennent un premier moyen de pompage (17; 41) opérationnellement couplé à l'une desdites fibres actives (12; 30) et un second moyen de pompage (17; 41) opérationnellement couplé à l'autre desdites fibres actives (12; 30) dudit oscillateur laser (2; 51) et dudit amplificateur (3).

6. Générateur de signaux optiques selon la revendication 1, caractérisé par le fait que lesdits moyens de pompage (41) sont couplés à l'extrémité (36) de ladite fibre active (30) dudit amplificateur (3) qui est à l'opposé de ladite source (2; 51).

7. Générateur de signaux optiques selon la revendication 1, caractérisé par le fait que lesdites fibres actives (12; 30) dudit oscillateur laser (2; 51) et dudit amplificateur (3) ont une âme dopée avec au moins une substance fluorescente identique.

8. Générateur de signaux optiques selon la revendication 7, caractérisé par le fait que ladite substance fluorescente est constituée par de l'erbium.

9. Générateur de signaux optiques selon la revendication 1, caractérisé par le fait que lesdites fibres actives (12; 30) dudit oscillateur laser (2; 51) et dudit amplificateur (3) ont une âme dopée avec au moins une substance identique de modification de l'indice de réfraction, constituée par de l'alumine.

10. Générateur de signaux optiques selon la revendication 2, caractérisé par le fait qu'entre ladite source (2; 51) et ledit amplificateur (3) sont intercalés des moyens (6) de modulation de la largeur desdits signaux à la longueur d'onde d'émission.

11. Générateur de signaux optiques selon la revendication 10, caractérisé par le fait qu'entre ladite source (2; 51) et lesdits moyens (6) de modulation est intercalé un isolateur optique (5) disposé pour ne permettre la propagation de la lumière que de ladite source audit amplificateur.

12. Générateur de signaux optiques selon la revendication 1, caractérisé par le fait qu'il comprend un isolateur optique (8) placé en aval de la fibre active (30) dudit amplificateur (3) par rapport à la direction de propagation du signal d'émission.

13. Générateur de signaux optiques selon la revendication 8, caractérisé par le fait que ladite longueur d'onde d'émission est dans une plage comprise entre 1530 et 1550 nm.

14. Générateur de signaux optiques selon la revendication 8, caractérisé par le fait que ladite longueur d'onde de pompage vaut 980 nm.
